# EUROPÄISCHE PATENTANMELDUNG

(11) **EP 4 765 526 A1**
(43) Veröffentlichungstag der Anmeldung: **24.06.2026**
(21) Anmeldenummer: 25216559.2
(22) Anmeldetag: 18.11.2025
(51) Int. Cl.: H02G 1/00, H02G 1/12

(54) **VORRICHTUNG UND VERFAHREN ZUM BEARBEITEN EINES KABELS**

(30) Priorität: 20.12.2024 DE 102024139263
(71) Anmelder: Metzner Holding GmbH, 89079 Ulm (DE)
(72) Erfinder: Sorg, Manfred, 89079 Ulm (DE)
(74) Vertreter: Lorenz & Kollegen

(57) **Zusammenfassung**

Die Erfindung betrifft eine Vorrichtung (1) zum Bearbeiten eines Kabels (2), aufweisend eine Aktuatoreinrichtung (13), ein primäres Werkzeugpaar (3), ein sekundäres Werkzeugpaar (4) und eine Werkzeugaufnahmeeinrichtung (8) mit einer ersten Aufnahmeeinheit (9) und einer zweiten Aufnahmeeinheit (10), die winklig zu einer Kabelzuführrichtung (K) und relativ zueinander von der Aktuatoreinrichtung (13) entlang einer Werkzeugbewegungsachse (W) bewegbar sind. Die Werkzeugpaare (3, 4) weisen jeweils ein erstes Kabelbearbeitungswerkzeug (5) und ein gegenüberliegendes, zweites Kabelbearbeitungswerkzeug (6) auf, mit jeweils aufeinander ausgerichteten Funktionsbereichen (7), so dass eine Bearbeitung des Kabels (2) zwischen den Kabelbearbeitungswerkzeugen (5, 6) des jeweiligen Werkzeugpaares (3, 4) erfolgen kann. Es ist vorgesehen, dass in der ersten Aufnahmeeinheit (9) ein erstes Kabelbearbeitungswerkzeug (5) des primären Werkzeugpaares (3) und ein zweites Kabelbearbeitungswerkzeug (6) des sekundären Werkzeugpaares (4) gegenüberliegend, und in der zweiten Aufnahmeeinheit (10) ein zweites Kabelbearbeitungswerkzeug (6) des primären Werkzeugpaares (3) und ein erstes Kabelbearbeitungswerkzeug (5) des sekundären Werkzeugpaares (4) gegenüberliegend angeordnet sind.

## Beschreibung

Die Erfindung betrifft eine Vorrichtung zum Bearbeiten eines Kabels, aufweisend eine Aktuatoreinrichtung, ein primäres Werkzeugpaar, ein sekundäres Werkzeugpaar und eine Werkzeugaufnahmeeinrichtung mit einer ersten Aufnahmeeinheit und einer zweiten Aufnahmeeinheit, die winklig zu einer Kabelzuführrichtung und relativ zueinander von der Aktuatoreinrichtung entlang einer Werkzeugbewegungsachse bewegbar sind.

Die Erfindung betrifft außerdem ein Verfahren zur Bearbeitung eines Kabels.

Es besteht Bedarf, die Industrie mit auf Länge geschnittenen und an wenigstens einem Ende abisolierten Kabelstücken zu versorgen. Hierzu sind aus dem Stand der Technik Abisoliervorrichtungen bekannt, wozu nur beispielshaft auf die EP 1 271 729 B1, die EP 0 927 444 B1 und die DE 101 13 082 C1 verwiesen wird.

Bei den bekannten Vorrichtungen wird das Kabel häufig zunächst in eine Einrichtung eingeführt, die eines oder mehrere Ablängmesser aufweist, um das Kabel an einer definierten axialen Position abzuschneiden. Anschließend kann das Kabel in einer weiteren Einrichtung mittels eines Abisoliermessers oder auf sonstige Weise weiterbearbeitet werden.

Der beschriebene Gesamtvorgang ist insbesondere im Rahmen einer vollautomatisierten Kabelbearbeitung vergleichsweise zeitaufwendig. Eine Anforderung an einen Kabelkonfektionierungsprozess, insbesondere für die Automobilindustrie, besteht allerdings insbesondere darin, dass die konfektionierten Kabel in hohen Stückzahlen wirtschaftlich hergestellt werden müssen.

In Anbetracht des bekannten Stands der Technik besteht die Aufgabe der vorliegenden Erfindung darin, eine Vorrichtung zum Bearbeiten eines Kabels bereitzustellen, insbesondere zum Ablängen und Abisolieren des Kabels, die sich vorzugsweise für eine teiloder vollautomatisierte Kabelkonfektionierung im Rahmen einer Massenfertigung eignet.

Der vorliegenden Erfindung liegt auch die Aufgabe zugrunde, ein Verfahren zum Bearbeiten eines Kabels bereitzustellen, insbesondere zum Ablängen und Abisolieren des Kabels, das sich vorzugsweise für eine teil- oder vollautomatisierte Kabelkonfektionierung im Rahmen einer Massenfertigung eignet.

Die Aufgabe wird für die Vorrichtung mit den in Anspruch 1 aufgeführten Merkmalen gelöst. Hinsichtlich des Verfahrens wird die Aufgabe durch die Merkmale des Anspruchs 15 gelöst.

Die abhängigen Ansprüche und die nachfolgend beschriebenen Merkmale betreffen vorteilhafte Ausführungsformen und Varianten der Erfindung.

Die Erfindung betrifft eine Vorrichtung zum Bearbeiten eines Kabels, aufweisend eine Aktuatoreinrichtung, ein primäres Werkzeugpaar, ein sekundäres Werkzeugpaar und eine Werkzeugaufnahmeeinrichtung mit einer ersten Aufnahmeeinheit und einer zweiten Aufnahmeeinheit, die winklig zu einer Kabelzuführrichtung und relativ zueinander von der Aktuatoreinrichtung entlang einer Werkzeugbewegungsachse bewegbar sind.

Bei dem Kabel kann es sich im Rahmen der vorliegenden Erfindung insbesondere um ein elektrisches oder optisches Kabel handeln. Vorzugsweise kann das Kabel als Automotive-Hochvolt-Leitung ausgebildet sein. Grundsätzlich kann es sich allerdings auch um eine Datenleitung bzw. um ein beliebiges Kabel handeln. Beispielsweise kann das elektrische Kabel als Koaxialkabel mit genau einem Innenleiter und genau einem Außenleiter oder als mit einem Außenleiter geschirmtes Kabel mit zwei oder mehr Innenleitern ausgebildet sein. Auch Flachbandleitungen können mit der erfindungsgemäßen Vorrichtung vorteilhaft bearbeitet werden. Das Kabel wird nachfolgend im Wesentlichen als elektrisches Kabel beschrieben, was für die Erfindung allerdings ebenfalls nicht einschränkend zu verstehen ist. Alle Ausführungsbeispiele, die sich auf die Verwendung eines elektrischen Kabels beziehen, sind grundsätzlich auf ein beliebiges Kabel übertragbar, insbesondere auch auf ein optisches Kabel.

Der Bereich des Kabels, in dem die erfindungsgemäße Bearbeitung vornehmlich stattfindet, wird nachfolgend mitunter auch als "zu bearbeitender Kabelabschnitt" bezeichnet. Bei dem zu bearbeitenden Kabelabschnitt kann es sich um ein Kabelendstück handeln. Vorzugsweise werden zwei Kabelabschnitte des Kabels, insbesondere beide Kabelendstücke, bearbeitet.

Bei der erfindungsgemäßen Vorrichtung kann es sich vorzugsweise um eine teilautomatisierte oder vollautomatisierte Vorrichtung handeln.

Die Vorrichtung kann beispielsweise eine Steuereinrichtung aufweisen, die eingerichtet ist, die jeweiligen Komponenten der Vorrichtung bedarfsweise zu betätigen und/oder um Zustände der Vorrichtung sensorisch zu erfassen und/oder um ein Bedieninterface für einen Benutzer der Vorrichtung zu betreiben.

Besagte Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Erfindungsgemäß weisen die Werkzeugpaare jeweils ein erstes Kabelbearbeitungswerkzeug und ein gegenüberliegendes, zweites Kabelbearbeitungswerkzeug auf, mit jeweils aufeinander ausgerichteten Funktionsbereichen, so dass eine Bearbeitung des Kabels zwischen den Kabelbearbeitungswerkzeugen des jeweiligen Werkzeugpaares erfolgen kann.

Somit sind die Kabelbearbeitungswerkzeuge eines gemeinsamen Werkzeugpaares vorzugsweise um 180° zueinander verdreht und jeweils auf die Mittelachse des zu bearbeitenden Kabels ausgerichtet. Im Falle von als Messern (z. B. Abisoliermesser, Ablängmesser oder Längsschlitzmesser) ausgebildeten Kabelbearbeitungswerkzeugen eines Werkzeugpaares können deren Schneiden daher jeweils in Richtung auf die Kabelmittelachse ausgerichtet sein bzw. einander gegenüberliegen.

Erfindungsgemäß ist außerdem vorgesehen, dass
- in der ersten Aufnahmeeinheit ein erstes Kabelbearbeitungswerkzeug des primären Werkzeugpaares und ein zweites Kabelbearbeitungswerkzeug des sekundären Werkzeugpaares gegenüberliegend; und
- in der zweiten Aufnahmeeinheit ein zweites Kabelbearbeitungswerkzeug des primären Werkzeugpaares und ein erstes Kabelbearbeitungswerkzeug des sekundären Werkzeugpaares gegenüberliegend
angeordnet sind.

Somit sind die Kabelbearbeitungswerkzeuge eines gemeinsamen Werkzeugpaares also auf die beiden Aufnahmeeinheiten aufgeteilt. Das heißt, jede der Aufnahmeeinheiten weist jeweils ein Kabelbearbeitungswerkzeug des primären Werkzeugpaares und ein Kabelbearbeitungswerkzeug des sekundären Werkzeugpaares auf.

Zur Vereinfachung werden die beiden Kabelbearbeitungswerkzeuge der ersten Aufnahmeeinheit nachfolgend auch als "erste Werkzeuggruppe" und die Kabelbearbeitungswerkzeuge der zweiten Aufnahmeeinheit als "zweite Werkzeuggruppe" bezeichnet.

Auf vorteilhafte Weise sind die jeweils in derselben Aufnahmeeinheit aufgenommenen Kabelbearbeitungswerkzeuge, also die Kabelbearbeitungswerkzeuge einer gemeinsamen Werkzeuggruppe, gegenüberliegend angeordnet, das heißt auf die Kabelmittelachse ausgerichtet, vergleichbar mit den Kabelbearbeitungswerkzeugen eines gemeinsamen Werkzeugpaares. Das heißt, dass jedem Kabelbearbeitungswerkzeug ein Kabelbearbeitungswerkzeug desselben Werkzeugpaares und ein Kabelbearbeitungswerkzeug des anderen Werkzeugpaares gegenüberliegt.

Die sich gegenüberliegenden Kabelbearbeitungswerkzeuge derselben Aufnahmeeinheit bzw. derselben Werkzeuggruppe können vorzugsweise zumindest im Betrieb der Vorrichtung relativ zueinander feststehend bzw. ortsfest angeordnet sein, so dass diese beispielsweise im Falle der Bewegung der Aufnahmeeinheiten durch die Aktuatoreinrichtung stets denselben Abstand zueinander beibehalten. Optional können die Positionen und Ausrichtungen der Kabelbearbeitungswerkzeuge derselben Aufnahmeeinheit allerdings auch veränderlich sein, insbesondere vor Betriebsaufnahme der Vorrichtung justierbar sein.

Vorzugsweise sind die Kabelbearbeitungswerkzeuge derart in den Aufnahmeeinheiten aufgenommen, dass sich die Kabelbearbeitungswerkzeuge gemeinsam bzw. synchron mit der jeweiligen Aufnahmeeinheit bewegen lassen.

Auf die vorgeschlagene Weise ist es möglich, mehrere Kabelbearbeitungsprozesse in derselben Vorrichtung vorteilhaft zu kombinieren (beispielsweise ein Ablängen und Abisolieren des Kabels), so dass einerseits Komponenten der Vorrichtung wiederverwendet werden können und außerdem Bearbeitungszeit bei der Kabelbearbeitung eingespart werden kann. Durch die relative Positionierbarkeit der Aufnahmeeinheiten nebst Kabelbearbeitungswerkzeugen kann bestimmt werden, welches Werkzeugpaar jeweils für die Kabelbearbeitung zur Anwendung kommt.

Vorzugsweise befindet sich jeweils nur ein Werkzeugpaar in einer Kabelbearbeitungsposition zur Bearbeitung des Kabels, während sich das andere Werkzeugpaar in einer Parkposition befindet.

Auf die vorgeschlagene Weise kann - bei einer entsprechenden Gestaltung der Kabelbearbeitungswerkzeuge - gegebenenfalls sogar eine Kabelbearbeitung unabhängig vom Kabeldurchmesser des Kabels erfolgen, da die Zustellung der Kabelbearbeitungswerkzeuge an das Kabel durch Zustellung der Aufnahmeeinheiten aneinander im Betrieb der Vorrichtung flexibel sein kann.

An dieser Stelle sei erwähnt, dass unter der relativen Bewegung der Aufnahmeeinheiten zueinander nicht zwingend zu verstehen ist, dass tatsächlich beide Aufnahmeeinheiten von der Aktuatoreinrichtung aktiv bewegt werden. Grundsätzlich kann auch die Bewegung nur einer einzigen Aufnahmeeinheit relativ zu der anderen Aufnahmeeinheit ausreichend sein.

In einer besonders vorteilhaften Weiterbildung der Erfindung kann vorgesehen sein, dass die Aufnahmeeinheiten bewegungsgekoppelt sind.

Insbesondere können die Aufnahmeeinheiten von der Aktuatoreinrichtung synchron gegenläufig bewegbar sein.

Auf diese Weise kann bereits die Verwendung eines einzigen Antriebs (z. B. eines Elektromotors, eines hydraulischen Motors oder eines pneumatischen Motors) zur gemeinsamen Bewegung beider Aufnahmeeinheiten ausreichend sein.

Durch die synchrone, gegenläufige Bewegung kann es ermöglicht werden, die Kabelbearbeitung lokal an derselben Position durchzuführen, unabhängig davon, welches Werkzeugpaar für die Kabelbearbeitung verwendet wird. Eine Neupositionierung des Kabels, der Vorrichtung oder ein Mitführen des Kabels entlang einer Hubbewegung der Aufnahmeeinheiten ist dadurch nicht erforderlich.

Vorzugsweise ist die Werkzeugbewegungsachse zu der Kabelzuführrichtung um zumindest 45° verkippt, weiter bevorzugt um zumindest 70°, noch weiter bevorzugt um zumindest 80°, ganz besonders bevorzugt um zumindest annähernd 90° oder genau 90° verkippt. Das heißt, die relative Bewegung der Aufnahmeeinheiten kann vorzugsweise gegenüber der Kabelzuführrichtung zumindest annähernd orthogonal verlaufen.

Gemäß einer Weiterbildung der Erfindung kann vorgesehen sein, dass die Aufnahmeeinheiten von der Aktuatoreinrichtung relativ zueinander linear bewegbar sind.

Eine lineare Bewegung hat sich als besonders vorteilhaft realisierbar herausgestellt, wobei grundsätzlich allerdings auch eine rotative Bewegbarkeit oder eine Kombination einer linearen und rotativen Bewegung zwischen den Aufnahmeeinheiten vorgesehen sein kann.

Gemäß einer Weiterbildung der Erfindung kann vorgesehen sein, dass die Aufnahmeeinheiten mit einer jeweiligen Seite bzw. Seitenfläche zumindest abschnittsweise unmittelbar aneinander anliegen. Insbesondere können die Aufnahmeeinheiten im Verlauf der relativen Bewegung längsseits zueinander verschiebbar sein.

Im Verlauf der relativen Bewegung der Aufnahmeeinheiten können deren Seitenflächen somit vorteilhaft aufeinander gleiten. Die Seiten bzw. Seitenflächen der Aufnahmeeinheiten müssen sich allerdings nicht zwingend berühren und können auch voneinander beabstandet sein.

Es kann vorgesehen sein, dass die Aufnahmeeinheiten an den einander zugewandten Seiten bzw. Seitenflächen eine gegenseitige Führung ausbilden, insbesondere eine gegenseitige Linearführung, wir zum Beispiel eine Führungsnut einerseits und eine korrespondierende Führungsrippe andererseits. Im Rahmen der gegenseitigen Führung der Aufnahmeeinheiten kann auch ein mehrseitiger Formschluss vorgesehen sein, wie beispielsweise bei einer Schwalbenschwanzverbindung.

Es kann vorgesehen sein, dass sich die Aufnahmeeinheiten gegenseitig umgreifen bzw. umklammern (beispielsweise im Bereich deren axialer Enden), um eine gegenseitige (Linear)Führung bereitzustellen. Beispielsweise kann vorgesehen sein, dass jede der Aufnahmeeinheiten an einem axialen Ende einen Führungsbolzen und die andere Aufnahmeeinheit an dem entsprechenden Ende eine korrespondierende Führungsaufnahme für den Führungsbolzen aufweist.

Grundsätzlich kann allerdings auch vorgesehen sein, dass die Aufnahmeeinheiten voneinander beabstandet sind und beispielweise von einer separaten Führung der Vorrichtung jeweils gehalten bzw. geführt werden.

In einer Weiterbildung der Erfindung kann vorgesehen sein, dass die Aufnahmeeinheiten Aufnahmeschlitze für die Kabelbearbeitungswerkzeuge aufweisen, so dass die Kabelbearbeitungswerkzeuge winklig zu der Kabelzuführrichtung und vorzugsweise winklig zu der Werkzeugbewegungsachse entlang einer Werkzeugmontagerichtung in die Aufnahmeeinheiten einführbar sind.

Die Werkzeugmontagerichtung ist vorzugsweise um zumindest 45° zu der Werkzeugbewegungsachse und/oder Kabelzuführung geneigt ausgerichtet, weiter bevorzugt um zumindest 70°, noch weiter bevorzugt um zumindest 80°, ganz besonders bevorzugt um zumindest annähernd 90° oder genau 90°. Besonders bevorzugt sind die Werkzeugmontagerichtung, die Kabelzuführrichtung und die Werkzeugbewegungsachse jeweils zueinander orthogonal angeordnet.

Auf die vorgeschlagene Weise kann der Bauraum der Vorrichtung besonders vorteilhaft ausnutzbar und die Zugänglichkeit für einen Monteur zur Montage der Kabelbearbeitungswerkzeuge optimiert sein. Die Kabelbearbeitungswerkzeuge können der Vorrichtung somit vorteilhaft seitlich zugeführt werden.

In einer Weiterbildung der Erfindung kann vorgesehen sein, dass die Aufnahmeschlitze als Hohlräume zwischen den unmittelbar aneinander anliegenden Aufnahmeeinheiten ausgebildet sind.

Besagte Hohlräume können somit insbesondere als Rücksprünge bzw. Vertiefungen bzw. Nuten in den jeweiligen Seitenflächen der Aufnahmeeinheiten ausgebildet sein, die durch die entsprechende Gegenfläche der anderen Aufnahmeeinheit zusammenwirken, so dass sich jeweilige Aufnahmeschlitze für die Kabelbearbeitungswerkzeuge bilden.

Es kann allerdings auch vorgesehen sein, dass die Aufnahmeschlitze für die Kabelbearbeitungswerkzeuge innerhalb eines Werkzeughalters (z. B. eines Messerhalters) der Aufnahmeeinheiten gebildet sind. Der Werkzeughalter kann beispielsweise eine oder mehrere Klemmbacken aufweisen, zwischen denen das Kabelbearbeitungswerkzeug einspannbar ist. Insbesondere kann auch eine Kombination aus Werkzeughaltern und Hohlräumen zwischen den Aufnahmeeinheiten vorgesehen sein, so dass beispielsweise jede der Aufnahmeeinheiten einen mit der anderen Aufnahmeeinheit gebildeten Hohlraum und einen Werkzeughalter aufweist.

Ein Werkzeughalter kann insbesondere dann vorteilhaft sein, wenn spezielle Kabelbearbeitungswerkzeuge, wie beispielsweise beheizte Formwerkzeuge, zum Einsatz kommen sollen, die thermisch von umgebenden Strukturen abgeschirmt werden müssen.

In einer vorteilhaften Weiterbildung der Erfindung kann vorgesehen sein, dass die Aufnahmeschlitze zumindest einer der Aufnahmeeinheiten, vorzugsweise beider Aufnahmeeinheiten, von einer gemeinsamen Abdeckung verdeckbar sind.

Die Aufnahmeschlitze können insbesondere von einer schwenk- bzw. rotierbaren Abdeckung verdeckbar sein, deren Rotationsachse vorzugsweise parallel zu der Werkzeugmontagerichtung verläuft. Grundsätzlich kann die Abdeckung allerdings auch linear verschiebbar oder mit der oder den Aufnahmeeinheiten ungeführt verrastbar sein.

Eine Verdeckung der Aufnahmeschlitze im Betrieb der Vorrichtung hat sich als vorteilhaft herausgestellt, da dann im Falle von unerwarteten Querkräften sichergestellt ist, dass die Kabelbearbeitungswerkzeuge nicht aus der Vorrichtung herausfallen und außerdem auch in ihrer optimal ausgerichteten Position verbleiben.

Die Verwendung einer schwenk- bzw. rotierbaren Abdeckung hat sich als besonders komfortabel für den Monteur herausgestellt, wobei eine Abdeckung mit einer Rotationsachse, die parallel zu der Werkzeugmontagerichtung verläuft, außerdem besonders hohe Querkräfte aufzunehmen vermag, ohne den Aufnahmeschlitz ungewollt freizugeben.

In einer Weiterbildung der Erfindung kann vorgesehen sein, dass die in der ersten Aufnahmeeinheit angeordneten Kabelbearbeitungswerkzeuge (also die erste Werkzeuggruppe) in einer ersten Ebene und die in der zweiten Aufnahmeeinheit angeordneten Kabelbearbeitungswerkzeuge (also die zweite Werkzeuggruppe) in einer von der ersten Ebene verschiedenen, zweiten Ebene angeordnet sind.

Die in den jeweiligen Aufnahmeeinheiten aufgenommenen Kabelbearbeitungswerkzeuge sind somit vorzugsweise in verschiedenen Ebenen bzw. an verschiedenen axialen Positionen entlang der Kabelzuführrichtung angeordnet. Hierdurch sind die Kabelbearbeitungswerkzeuge eines gemeinsamen Werkzeugpaars somit zwar weiterhin aufeinander bzw. auf die Kabelmittelachse des Kabels ausgerichtet, allerdings in Axialrichtung zueinander versetzt.

Hingegen sind die Kabelbearbeitungswerkzeuge derselben Aufnahmeeinheit vorzugsweise in derselben Ebene angeordnet (dies ist allerdings nicht zwingend der Fall). Denn es kann grundsätzlich auch vorgesehen sein, dass die Kabelbearbeitungswerkzeuge derselben Aufnahmeeinheiten in Axialrichtung zueinander versetzt sind, wobei dann gegebenenfalls (jedoch nicht zwingend) die jeweiligen Kabelbearbeitungswerkzeuge des gemeinsamen Werkzeugpaars in derselben axialen Ebene positioniert sind. Ein Versatz der Kabelbearbeitungswerkzeuge derselben Aufnahmeeinheit kann beispielsweise dann von Vorteil sein, wenn ein größerer axialer Versatz zwischen den Werkzeugpaaren gewünscht ist, was unter anderem dann der Fall sein kann, wenn die Kabelbearbeitungswerkzeuge eines Werkzeugpaares beheizt sein sollen. Die Aufnahmeeinheiten können in diesem Fall beispielsweise einen oder mehrere Ausleger aufweisen, an oder in denen zumindest eines der Kabelbearbeitungswerkzeuge befestigt sein kann. Es kann dabei auch vorgesehen sein, dass zumindest ein Ausleger einer der Aufnahmeeinheiten an der anderen Aufnahmeeinheit vorbei oder durch einen Durchbruch in der anderen Aufnahmeeinheit hindurchgeführt ist, so dass die Aufnahmeeinheiten weiterhin relativ zueinander bewegbar sind.

In einer vorteilhaften Weiterbildung der Erfindung kann vorgesehen sein, dass die in der ersten Aufnahmeeinheit angeordneten Kabelbearbeitungswerkzeuge und die in der zweiten Aufnahmeeinheit angeordneten Kabelbearbeitungswerkzeuge mit einer jeweiligen Werkzeugfläche im Verlauf der relativen Bewegung der Aufnahmeeinheiten unmittelbar aufeinander gleitend, längsseits zueinander verschiebbar sind.

Grundsätzlich kann allerdings auch eine axiale Beabstandung der Kabelbearbeitungswerkzeuge der verschiedenen Aufnahmeeinheiten vorgesehen sein. Wie vorstehend bereits erwähnt, kann sogar eine größere axiale Beabstandung vorgesehen sein, insbesondere wenn pro Aufnahmeeinheit zumindest eines der Kabelbearbeitungswerkzeuge an einem Ausleger befestigt ist.

Es sei außerdem erwähnt, dass die Kabelbearbeitungswerkzeuge eines gemeinsamen Werkzeugpaares auch in derselben Ebene verlaufen können, so dass die Kabelbearbeitungswerkzeuge im vollständig aneinander zugestellten Zustand stirnseitig aufeinandertreffen (als Alternative zu einem "vorbeigleiten").

In einer vorteilhaften Weiterbildung der Erfindung kann vorgesehen sein, dass die Kabelbearbeitungswerkzeuge derselben Aufnahmeeinheit jeweils einstückig aus einem gemeinsamen Grundkörper ausgebildet sind.

Somit können also insbesondere Kabelbearbeitungswerkzeuge verschiedener Werkzeugpaare (also die Kabelbearbeitungswerkzeuge der jeweiligen Werkzeuggruppen) einstückig bzw. monolithisch ausgebildet sein. Dies kann die Montierbarkeit bzw. Verwendbarkeit der Vorrichtung vereinfachen. Gleichzeitig kann allerdings die Modularität der Vorrichtung vermindert sein, weshalb der Fachmann anwendungsbedingt auch vorsehen kann, die Kabelbearbeitungswerkzeuge jeweils als Einzelbauteile auszugestalten, die jeweils separat in den Aufnahmeeinheiten montierbar sind.

In einer vorteilhaften Weiterbildung der Erfindung kann vorgesehen sein, dass die Kabelbearbeitungswerkzeuge und die Aufnahmeeinheiten jeweils mechanisch kodiert sind.

Auf diese Weise können die Kabelbearbeitungswerkzeuge beispielsweise nur in einer vordefinierten Orientierung, einer vordefinierten gegenseitigen Anordnung und/oder einer vordefinierten Verteilung auf die Aufnahmeeinheiten in der Werkzeugaufnahmeeinrichtung montierbar sein.

Die mechanische Kodierung kann beispielsweise durch Nasen, Rippen, Stifte oder sonstige Erhebungen einerseits und korrespondierende Vertiefungen andererseits realisiert sein.

In einer Weiterbildung der Erfindung kann vorgesehen sein, dass das primäre Werkzeugpaar und das sekundäre Werkzeugpaar für unterschiedliche Kabelbearbeitungsschritte im Rahmen der Bearbeitung des Kabels eingerichtet sind.

Vorzugsweise unterscheiden sich die Kabelbearbeitungswerkzeuge der verschiedenen Werkzeugpaare voneinander.

Die Erfindung eignet sich besonders vorteilhaft zur Verwendung mit Werkzeugpaaren für unterschiedliche Kabelbearbeitungsschritte im Rahmen der Bearbeitung desselben Kabels. Grundsätzlich kann sich die Erfindung allerdings auch dazu eignen, bedarfsweise Kabel mit verschiedenen Querschnitten oder sonstigen strukturellen/funktionellen Unterschieden zu bearbeiten. Das jeweils geeignete Werkzeugpaar kann somit durch die Aktuatoreinrichtung vorteilhaft auswählbar sein. Mittels der Vorrichtung kann insgesamt ein besonders schneller und effektiver Werkzeugwechsel durch den beschriebenen Gegentaktbetrieb erfolgen.

Gemäß einer Weiterbildung der Erfindung kann insbesondere vorgesehen sein, dass die Kabelbearbeitungswerkzeuge der Werkzeugpaare jeweils als Abisoliermesser, Ablängmesser, Längsschlitzmesser oder Formwerkzeug (jeweils ggf. auch beheizt) ausgebildet sind.

Somit kann beispielsweise vorgesehen sein, dass das Kabel zunächst an einem ersten Ende mittels des Abisoliermesserpaares abisoliert wird (z. B. kann ein Kabelmantel des Kabels abgetrennt werden, um einen darunter angeordneten Außenleiter freizulegen). Anschließend kann das Kabel in Kabelzuführrichtung weiterbewegt werden, bis eine vorgesehene Länge erreicht wurde, wonach das Kabel an der vorgesehenen Position mittels eines Ablängmesserpaares an dem zweiten Ende abgelängt wird. Wiederum anschließend kann optional auch das zweite Ende abisoliert werden. In Folge kann die Kabelbearbeitung mit dem ersten Ende des verbliebenen "Endloskabels" weitergeführt werden. Alternativ zu einem abwechselnden Ablängen und Abisolieren können die beschriebenen Werkzeugpaare auch für verschiedene Abisolierprozesse zum Einsatz kommen (z. B. zum Abisolieren des Kabelmantels, gefolgt von einem Abisolieren der Außenleiters oder eines Dielektrikums usw.).

Auch eine Längsschlitzung des Kabels in Kabelzuführrichtung bzw. entlang der Kabelmittelachse kann vorgesehen sein, falls erforderlich. Entsprechend kann auch eine Längsschlitzung mit einem Abisolieren und/oder Ablängen im Rahmen der erfindungsgemäßen Vorrichtung vorteilhaft kombinierbar sein.

Grundsätzlich eignen sich auch noch weitere Kabelbearbeitungsschritte zur Verwendung mit der vorgeschlagenen Vorrichtung, insbesondere wenn die Kabelbearbeitung mittels mehrerer Werkzeugpaare realisierbar sein kann. In Frage kommen diesbezüglich beispielsweise Formmesser (bzw. stumpfe Abisoliermesser), die zum Aufstellen eines Kabelschirms verwendet werden können, oder beheizte Formmesser zur mechanischen Schwächung einer Kabelfolie vor dem Entfernen der Kabelfolie.

In einer vorteilhaften Weiterbildung der Erfindung kann vorgesehen sein, dass die Kabelbearbeitungswerkzeuge jeweils mehrere Funktionsbereiche aufweisen, die in einer Raumrichtung winklig (vorzugsweise orthogonal) zu der Kabelzuführrichtung und winklig (vorzugsweise orthogonal) zu der Werkzeugbewegungsachse voneinander beabstandet sind.

Die besagten Funktionsbereiche können beispielsweise zur Bearbeitung von Kabeln mit verschiedenen Kabeldurchmessern oder zur Bearbeitung (z. B. zum Abisolieren) verschiedener Kabelschichten bzw. Kabelkomponenten eingerichtet sein.

Die Funktionsbereiche können vorzugsweise monolithisch in einem gemeinsamen Bauteil ausgebildet sein. Die Funktionsbereiche können allerdings auch mehrteilig voneinander getrennt sein - das heißt, das Kabelbearbeitungswerkzeug kann mehrteilig ausgebildet sein.

Es kann im Rahmen der Erfindung vorteilhaft möglich sein, neben der Auswahl des jeweiligen Werkzeugpaares auch zwischen einer Untergruppe von Kabelbearbeitungswerkzeugen bzw. deren Funktionsbereichen auszuwählen, vorzugsweise durch Verstellen der jeweiligen Aufnahmeeinheit oder der in der Aufnahmeeinheit aufgenommenen Kabelbearbeitungswerkzeuge in der Werkzeugmontagerichtung (z. B. manuell oder durch eine weitere Aktuatoreinrichtung).

Eine alternative oder zusätzliche Funktionserweiterung der Vorrichtung kann gegebenenfalls dadurch bereitgestellt werden, dass eine Kabelzuführeinrichtung zur Zuführung des Kabels in die Werkzeugaufnahmeeinrichtung linear und/oder rotatorisch verstellbar ist (insbesondere verschwenkbar ist), so dass das Kabel - je nach Bedarf - in unterschiedliche Werkzeugaufnahmeeinrichtungen einführbar ist, die jeweils unterschiedliche Werkzeugpaare/Kabelbearbeitungswerkzeuge enthalten (alternativ oder zusätzlich können auch die Werkzeugaufnahmeeinrichtungen entsprechend verstellbar sein).

An dieser Stelle sei erwähnt, dass die vorstehend beschriebene Vorrichtung die genannten Werkzeugpaare explizit aufweisen kann. Die Anmelderin behält sich jedoch vor, die Vorrichtung auch separat von den Werkzeugpaaren zu beanspruchen. Es kann daher im Rahmen des Erfindungsgedankens bereits ausreichend sein, wenn die Werkzeugaufnahmevorrichtung bzw. die Aufnahmeeinheiten ausgebildet sind, die Kabelbearbeitungswerkzeuge aufzunehmen (z. B. durch die besagten Aufnahmeschlitze).

Die Anmelderin behält sich außerdem vor, ein System aus der beschriebenen Vorrichtung und einem modularen Bausatz verschiedener Kabelbearbeitungswerkzeuge zu beanspruchen, die bedarfsweise in der Werkzeugaufnahmeeinrichtung montierbar sind.

Die Erfindung betrifft auch ein Verfahren zur Bearbeitung eines Kabels, umfassend zumindest die folgenden Verfahrensschritte:
- Bereitstellen eines ersten Kabelbearbeitungswerkzeugs eines primären Werkzeugpaares und eines hierzu gegenüberliegenden zweites Kabelbearbeitungswerkzeugs eines sekundären Werkzeugpaares in einer ersten Aufnahmeeinheit einer Werkzeugaufnahmeeinrichtung;
- Bereitstellen eines zweiten Kabelbearbeitungswerkzeugs des primären Werkzeugpaares und eines hierzu gegenüberliegenden ersten Kabelbearbeitungswerkzeugs des sekundären Werkzeugpaares in einer zweiten Aufnahmeeinheit der Werkzeugaufnahmeeinrichtung; und
- Bewegen der Aufnahmeeinheiten relativ zueinander winklig zu einer Kabelzuführrichtung, um eine Bearbeitung des Kabels zwischen den Kabelbearbeitungswerkzeugen des jeweiligen Werkzeugpaares durchzuführen.

Merkmale, die im Zusammenhang mit einem der Gegenstände der Erfindung, namentlich gegeben durch eine der erfindungsgemäßen Vorrichtungen, das System und das Verfahren, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige Vorrichtung zum Bearbeiten eines Kabels, aufweisend ein primäres Werkzeugpaar und ein sekundäres Werkzeugpaar, wobei die Werkzeugpaare jeweils ein erstes Kabelbearbeitungswerkzeug und ein gegenüberliegendes, zweites Kabelbearbeitungswerkzeug aufweisen, mit jeweils aufeinander ausgerichteten Funktionsbereichen, so dass eine Bearbeitung des Kabels zwischen den Kabelbearbeitungswerkzeugen des jeweiligen Werkzeugpaares erfolgen kann. Ein erstes Kabelbearbeitungswerkzeug des primären Werkzeugpaares und ein zweites Kabelbearbeitungswerkzeug des sekundären Werkzeugpaares bilden eine erste Werkzeuggruppe und sind einander gegenüberliegend, sowie ein zweites Kabelbearbeitungswerkzeug des primären Werkzeugpaares und ein erstes Kabelbearbeitungswerkzeug des sekundären Werkzeugpaares bilden eine zweite Werkzeuggruppe und sind ebenfalls einander gegenüberliegend angeordnet. Die Kabelbearbeitungswerkzeuge der ersten Werkzeuggruppe sind relativ zu den Kabelbearbeitungswerkzeugen der zweiten Werkzeuggruppe gemeinsam bewegbar, vorzugsweise linear gegenläufig bewegbar, wobei die Kabelbearbeitungswerkzeuge in derselben Werkzeuggruppe vorzugsweise unbeweglich zueinander angeordnet sind. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser separaten Vorrichtung.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine Vorrichtung gemäß einem Ausführungsbeispiel der Erfindung in einer perspektivischen Darstellung;
- Figur 2: eine vergrößerte Darstellung auf die Aufnahmeschlitze für die Kabelbearbeitungswerkzeuge der Vorrichtung gemäß Figur 1, während der Montage der Kabelbearbeitungswerkzeuge;
- Figur 3: die vergrößerte Darstellung gemäß Figur 2, im unbestückten Zustand;
- Figur 4: eine Einzeldarstellung der Aufnahmeeinheiten der Vorrichtung der Figur 1, in einem ersten Zustand;
- Figur 5: die Einzeldarstellung gemäß Figur 4, in einem zweiten Zustand;
- Figur 6: eine demontierte Einzeldarstellung der Aufnahmeeinheiten und der Kabelbearbeitungswerkzeuge der Vorrichtung gemäß Figur 1;
- Figur 7: ein als Längsschlitzmesser ausgebildetes Kabelbearbeitungswerkzeug;
- Figur 8: ein Kabelbearbeitungswerkzeug mit zwei nebeneinander angeordneten Funktionsbereichen;
- Figur 9: ein Ausführungsbeispiel einer erfindungsgemäßen Vorrichtung mit einer schwenkbaren Kabelzuführeinrichtung zur bedarfsweisen Auswahl einer Werkzeugaufnahmeeinrichtung für die Kabelbearbeitung;
- Figur 10: ein weiteres Ausführungsbeispiel einer erfindungsgemäßen Vorrichtung mit einem beheizten, an Auslegern der Aufnahmeeinheiten befestigten Werkzeugpaar; und
- Figur 11: die Vorrichtung der Figur 10 mit teilweise ausgeblendeten Komponenten zur besseren Darstellung der Ausleger.

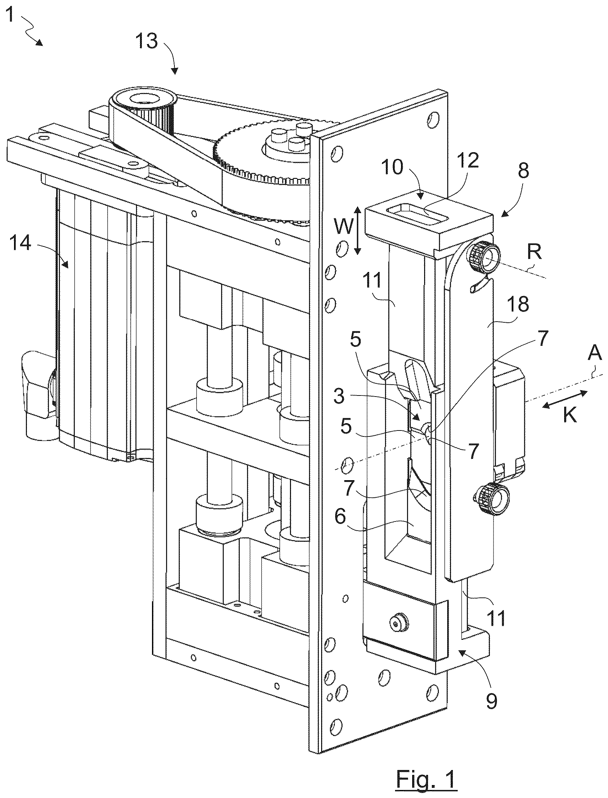

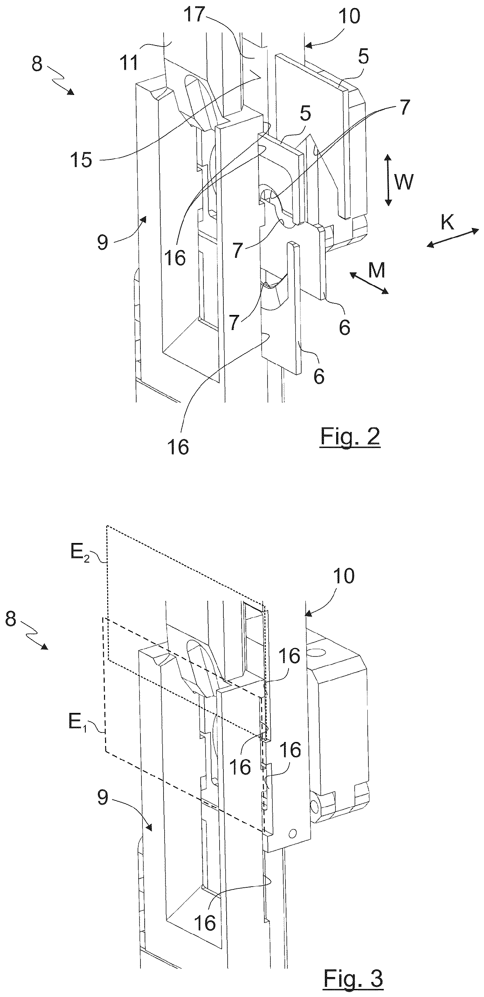

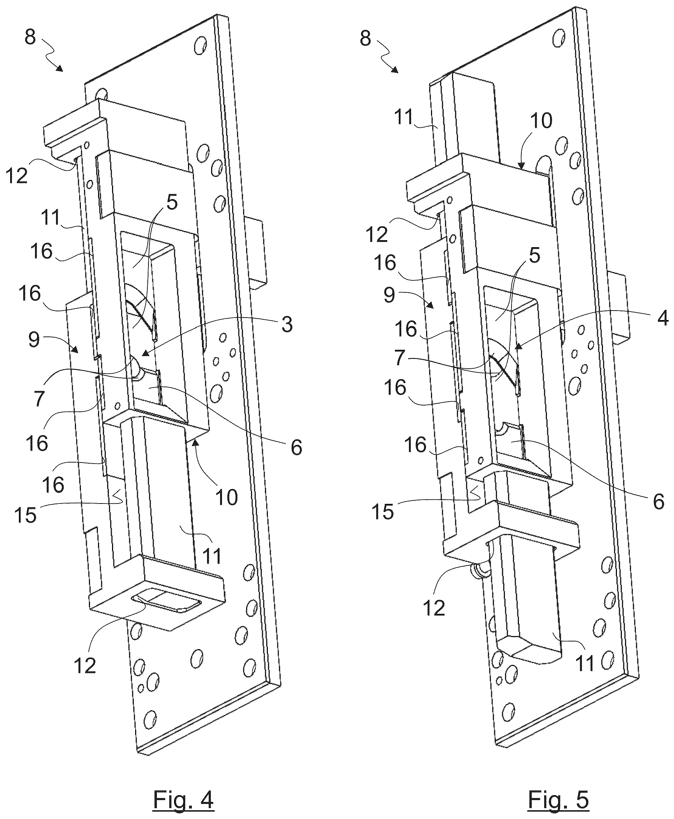

Die Figuren 1 bis 6 zeigen eine Vorrichtung 1 zum Bearbeiten eines Kabels 2 gemäß einem Ausführungsbeispiel der Erfindung. In Figur 1 ist die Vorrichtung 1 in einer perspektivischen Gesamtdarstellung gezeigt. Die Figuren 2 und 3 zeigen eine vergrößerte Darstellung auf einen Bereich der Vorrichtung 1 und die Figuren 4 bis 6 verschiedene Einzeldarstellungen.

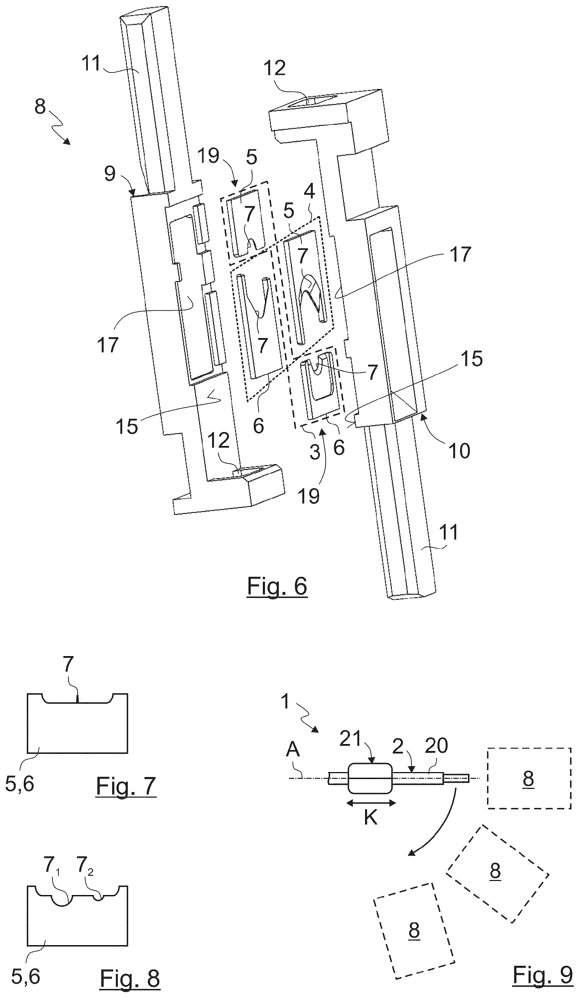

Die vorgeschlagene Vorrichtung 1 weist ein primäres Werkzeugpaar 3 und ein sekundäres Werkzeugpaar 4 auf (vgl. die strichlinierte Zusammenfassung in der Darstellung von Figur 6). Jedes Werkzeugpaar 3, 4 weist ein erstes Kabelbearbeitungswerkzeug 5 und ein gegenüberliegendes, zweites Kabelbearbeitungswerkzeug 6 auf, deren jeweilige Funktionsbereiche 7 aufeinander ausgerichtet sind, so dass eine Bearbeitung des Kabels 2 zwischen den Kabelbearbeitungswerkzeugen 5, 6 des jeweiligen Werkzeugpaares 3, 4 erfolgen kann. Das heißt, die Kabelbearbeitungswerkzeuge 5, 6 eines gemeinsamen Werkzeugpaares 3, 4 können entsprechend um 180° verdreht und auf eine Kabelmittelachse A (vgl. Figur 1) des Kabels 2 ausgerichtet sein (das Kabel 2 ist in den Figuren 1 bis 6 nicht dargestellt).

Die Vorrichtung 1 weist außerdem eine Werkzeugaufnahmeeinrichtung 8 mit einer ersten Aufnahmeeinheit 9 und einer zweiten Aufnahmeeinheit 10 auf, die winklig, insbesondere orthogonal, zu einer Kabelzuführrichtung K (vgl. Figur 1) und relativ zueinander entlang einer Werkzeugbewegungsachse W (vgl. Figur 1) bewegbar sind. Die Aufnahmeeinheiten 9, 10 sind bewegungsgekoppelt und synchron gegenläufig linear zueinander bewegbar. Dabei ist eine gegenseitige Linearführung vorgesehen, für die jede der Aufnahmeeinheiten 9, 10 an einem axialen Ende einen Führungsbolzen 11 und eine mit dem Führungsbolzen 11 der jeweiligen anderen Aufnahmeeinheit 10, 9 korrespondierende Führungsaufnahme 12 aufweist (vgl. insbesondere die Figuren 4 bis 6).

Für die Bewegung der Aufnahmeeinheiten 9, 10 relativ zueinander ist eine gemeinsame Aktuatoreinrichtung 13 vorgesehen, die beispielsweise einen Elektromotor oder pneumatischen/hydraulischen Motor 14 aufweisen kann, wie in Figur 1 angedeutet. Die Übersetzung der rotatorischen Bewegung in eine lineare Bewegung kann beispielsweise über eine Zahnstange erfolgen. Generell ist das in Figur 1 angedeutete Antriebskonzept lediglich beispielhaft zu verstehen.

Wie in den Figuren 4, 5 und 6 gut erkennbar, sind die Aufnahmeeinheiten 9, 10 mit einer jeweiligen Seitenfläche 15 unmittelbar aneinander anliegend und im Verlauf der relativen Bewegung längsseits zueinander verschiebbar. Hierbei können die Aufnahmeeinheiten 9, 10 bzw. kann die Vorrichtung 1 insgesamt insbesondere zwei Endzustände einnehmen.

Die Aufnahmeeinheiten 9, 10 weisen Aufnahmeschlitze 16 für die Kabelbearbeitungswerkzeuge auf (vgl. insbesondere die Figuren 2 und 3), so dass die Kabelbearbeitungswerkzeuge 5, 6 winklig, vorzugsweise orthogonal, zu der Kabelzuführrichtung K und winklig, vorzugsweise orthogonal, zu der Werkzeugbewegungsachse W entlang einer Werkzeugmontagerichtung M (vgl. Figur 2) in die Aufnahmeeinheiten 9, 10 einführbar sind. In Figur 2 sind die Kabelbearbeitungswerkzeuge 5, 6 während der Werkzeugmontage dargestellt. Figur 3 zeigt einen Zustand der Vorrichtung 1 im vollständig unmontierten Zustand der Kabelbearbeitungswerkzeuge 5, 6 zur besseren Darstellung der Aufnahmeschlitze 16.

Die Aufnahmeschlitze 16 sind im Ausführungsbeispiel als Hohlräume zwischen den unmittelbar aneinander anliegenden Aufnahmeeinheiten 9, 10 ausgebildet (vgl. beispielsweise Figur 6). Hierfür weisen die Aufnahmeeinheiten 9, 10 in ihren Seitenflächen 15 entsprechende Vertiefungen 17 auf, um gemeinsam mit der jeweils anderen Aufnahmeeinheit 9, 10 entsprechende Aufnahmeschlitze 16 auszubilden.

Optional können die Kabelbearbeitungswerkzeuge 5, 6 und die Aufnahmeeinheiten 9, 10 jeweils mechanisch kodiert sein, so dass die Kabelbearbeitungswerkzeuge 5, 6 nur in einer vordefinierten Orientierung, einer vordefinierten gegenseitigen Anordnung und/oder einer vordefinierten Verteilung auf die Aufnahmeeinheiten 9, 10 in der Werkzeugaufnahmeeinrichtung 8 montierbar sind. Dies ist in den Ausführungsbeispielen zur Vereinfachung allerdings nicht dargestellt.

Die Aufnahmeschlitze 16 sind optional von einer gemeinsamen Abdeckung 18 verdeckbar, bei der es sich im Ausführungsbeispiel um eine schwenkbare Abdeckung 18 handelt, deren Rotationsachse R parallel zu der Werkzeugmontagerichtung M verläuft (vgl. Figur 1). Die Abdeckung 18 ist in den Figuren 2 und 3 zur besseren Darstellung der Aufnahmeschlitze 16 ausgeblendet. Auch eine linear verschiebbare Abdeckung oder eine sonstige Abdeckung kann vorgesehen sein. Gegebenenfalls kann auch auf eine Abdeckung vollständig verzichtet werden.

Es ist vorgesehen, dass in der ersten Aufnahmeeinheit 9 ein erstes Kabelbearbeitungswerkzeug 5 des primären Werkzeugpaares 3 und ein zweites Kabelbearbeitungswerkzeug 6 des sekundären Werkzeugpaares 4 zueinander feststehend und gegenüberliegend angeordnet sind. In der zweiten Aufnahmeeinheit 10 sind ein zweites Kabelbearbeitungswerkzeug 6 des primären Werkzeugpaares 3 und ein erstes Kabelbearbeitungswerkzeug 5 des sekundären Werkzeugpaares 4 zueinander feststehend und gegenüberliegend angeordnet. Die entsprechende Verteilung der Kabelbearbeitungswerkzeuge 5, 6 auf die Aufnahmeeinheiten 9, 10 ist insbesondere in den Figuren 2 und 6 gut erkennbar.

Letztlich bilden die Kabelbearbeitungswerkzeuge 5, 6 in den jeweiligen Aufnahmeeinheiten 9, 10 entsprechende Werkzeuggruppen 19, wobei die Kabelbearbeitungswerkzeuge 5, 6 einer gemeinsamen Werkzeuggruppe 19 (vgl. Figur 6) in den Aufnahmeschlitzen 16 entsprechend unbeweglich zueinander gehalten werden.

Die in der ersten Aufnahmeeinheit 9 angeordneten Kabelbearbeitungswerkzeuge 5, 6 sind in einer ersten Ebene E₁ und die in der zweiten Aufnahmeeinheit 10 angeordneten Kabelbearbeitungswerkzeuge 5, 6 in einer von der ersten Ebene E₁ verschiedenen, zweiten Ebene E₂ angeordnet (das heißt, sie sind entlang der Kabelzuführrichtung K axial voneinander beabstandet). Die Kabelbearbeitungswerkzeuge 5, 6 der verschiedenen Werkzeugpaare 3, 4 bzw. der verschiedenen Aufnahmeeinheiten 9, 10 sind vorzugsweise derart relativ zueinander angeordnet, dass diese während der Bewegung der Aufnahmeeinheiten 9, 10 ebenfalls unmittelbar aufeinander gleitend, längsseits zueinander verschiebbar sind bzw. von der Aufnahmeeinheit 9, 10 in ihrer Bewegung entsprechend mitgenommen werden.

Ein grundsätzlicher Verfahrensablauf zur Bearbeitung des Kabels 2 mittels der vorgeschlagenen Vorrichtung 1 soll nun beispielhaft beschrieben werden.

Nach der Bereitstellung der entsprechenden Kabelbearbeitungswerkzeuge 5, 6 in den Aufnahmeeinheiten 9, 10 der Werkzeugaufnahmeeinrichtung 8 können die Aufnahmeeinheiten 9, 10 relativ zueinander orthogonal zu der Kabelzuführrichtung K zwischen zwei Zuständen bewegbar sein, um eine Bearbeitung des Kabels 2 zwischen den Kabelbearbeitungswerkzeugen 5, 6 des jeweiligen Werkzeugpaares 3, 4 durchzuführen. Vorzugsweise sind das primäre Werkzeugpaar 3 und das sekundäre Werkzeugpaar 4 für unterschiedliche Kabelbearbeitungsschritte im Rahmen der Bearbeitung des Kabels 2 eingerichtet, wobei sich deren jeweilige Kabelbearbeitungswerkzeuge 5, 6 vorzugsweise voneinander unterscheiden. Im Ausführungsbeispiel sind die Kabelbearbeitungswerkzeuge 5, 6 des primären Werkzeugpaares 3 beispielhaft als Abisoliermesser und die Kabelbearbeitungswerkzeuge 5, 6 des sekundären Werkzeugpaares 4 als Ablängmesser ausgebildet.

In einem ersten Zustand der Vorrichtung 1, der beispielsweise in Figur 4 und Figur 1 angedeutet ist, sind durch entsprechende Verstellung der Aufnahmeeinheiten 9, 10 die Abisoliermesser des primären Werkzeugpaares 3 aneinander zugestellt, so dass diese das Kabel 2 durch Einschneiden in eine Kabelkomponente, wie beispielsweise einen Kabelmantel 20 (vgl. Figur 9) des Kabels 2 und eine axiale Bewegung abzuisolieren vermögen. In einem darauffolgenden, zweiten Zustand der Vorrichtung 1, der in Figur 5 dargestellt ist, sind hingegen die Ablängmesser des sekundären Werkzeugpaares 4 aneinander zugestellt und vermögen das Kabel 2 durch eine Abscherbewegung abzulängen. Wie vorstehend bereits erwähnt, kann ggf. aber auch eine stumpfe Zustellung der Kabelbearbeitungswerkzeuge vorgesehen sein, so dass die stumpfen Enden der jeweiligen Werkzeugpaare unmittelbar aufeinandertreffen.

Dadurch, dass die Aufnahmeeinheiten 9, 10 relativ zueinander gegensätzlich bewegbar sind, ist es möglich, dass die Kabelbearbeitung in derselben Höhenebene bzw. an derselben lokalen Position erfolgt, unabhängig davon, in welchem Zustand sich die Vorrichtung 1 befindet.

An dieser Stelle sei erwähnt, dass die Verwendung eines Abisoliermessers und eines Ablängmessers als Kabelbearbeitungswerkzeug 5, 6 lediglich beispielhaft zu verstehen ist. Beispielsweise kann es sich bei einem Kabelbearbeitungswerkzeug 5, 6 auch um ein Längsschlitzmesser handeln, um das Kabel 2 in Axialrichtung zu schlitzen. Ein Kabelbearbeitungswerkzeug 5, 6 mit einem entsprechenden Funktionsbereich 7 ist beispielhaft in Figur 7 angedeutet.

Ferner sei an dieser Stelle erwähnt, dass die Kabelbearbeitungswerkzeuge 5, 6 derselben Aufnahmeeinheit 9, 10 bzw. derselben Werkzeuggruppe 19 gegebenenfalls auch einstückig bzw. monolithisch aus einem gemeinsamen Grundkörper ausgebildet sein können. In dem dargestellten Ausführungsbeispiel sind die Kabelbearbeitungswerkzeuge 5, 6 jeweils separat ausgebildet, was die Modularität der Vorrichtung 1 erhöhen kann. Dies ist allerdings nicht unbedingt erforderlich.

Eine vorteilhafte Ergänzung der Erfindung ist in Figur 8 angedeutet. Es kann vorgesehen sein, dass die Kabelbearbeitungswerkzeuge 5, 6 jeweils mehrere Funktionsbereiche 7₁, 7₂ aufweisen, die in einer Raumrichtung winklig, vorzugsweise orthogonal, zu der Kabelzuführrichtung K und winklig, vorzugsweise orthogonal, zu der Werkzeugbewegungsachse W voneinander beabstandet sind (im Ausführungsbeispiel in Werkzeugmontagerichtung M). Die verschiedenen Funktionsbereiche 7₁, 7₂ können vorzugsweise zur Bearbeitung von Kabeln 2 mit verschiedenen Kabeldurchmessern oder zur Bereitstellung unterschiedlicher Funktionalitäten eingerichtet sein. Beispielhaft ist ein entsprechendes Kabelbearbeitungswerkzeug 5, 6 in Figur 8 angedeutet.

Eine weitere Möglichkeit, um die Funktionalität und Modularität der Vorrichtung 1 zu erhöhen, kann auch darin bestehen, dass eine Kabelzuführeinrichtung 21 der Vorrichtung 1 zur Zuführung des Kabels 2 verstellbar ist, beispielsweise verschwenkbar ist, wie in Figur 9 angedeutet, um das Kabel 2 wahlweise in verschiedene Werkzeugaufnahmeeinrichtungen 8 zuzustellen, deren Aufnahmeeinheiten 9, 10 mit unterschiedlichen Kabelbearbeitungswerkzeugen 5, 6 bzw. Werkzeugpaaren 3, 4 bestückt sind. Auch auf diese Weise kann beispielsweise ein einfacher Wechsel zwischen verschiedenen Kabeldurchmessern im Rahmen der Kabelbearbeitung möglich sein.

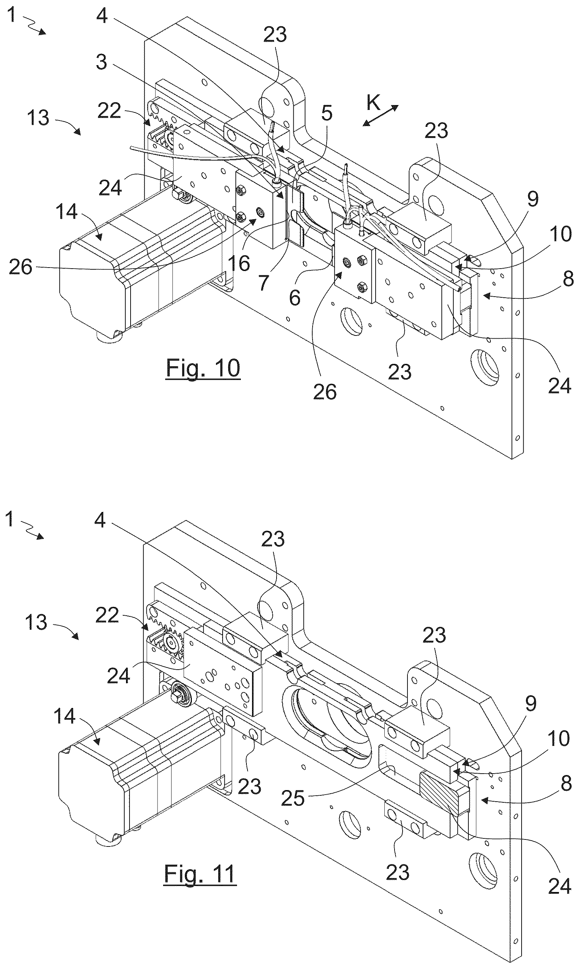

Schließlich soll anhand der Figuren 10 und 11 noch ein weiteres Ausführungsbeispiel der Erfindung vorgestellt werden. Nachfolgend wird dabei im Wesentlichen auf die Unterschiede zu den zuvor beschriebenen Ausführungsbeispielen eingegangen.

Wie sich im Hinblick auf die Figuren 10 und 11 ergibt, kann die Aktuatoreinrichtung 13 bzw. kann der Motor 14 beispielsweise auch mit einer Drehachse parallel zu der Kabelzuführrichtung K verlaufend ausgerichtet sein, was gegebenenfalls eine noch unmittelbarere Übersetzung der mechanischen Bewegung über die Zahnstange 22 ermöglichen kann. Wie bereits erwähnt, ist die Erfindung jedoch nicht auf ein konkretes Antriebskonzept beschränkt zu verstehen.

In dem in den Figuren 10 und 11 gezeigten Ausführungsbeispiel ist vorgesehen, dass die beiden Aufnahmeeinheiten 9, 10 nicht durch eine gegenseitige Führung, sondern durch eine von den Aufnahmeeinheiten 9, 10 separate Linearführung gehalten und geführt werden. Die separate Linearführung weist hierfür beispielhaft vier einzelne, klammerartige Führungsmittel 23 auf.

Der wesentliche Unterschied zu den vorherigen Ausführungsbeispielen ist jedoch darin zu erkennen, dass die Kabelbearbeitungswerkzeuge 5, 6 derselben Aufnahmeeinheit 9, 10 vorliegend nicht in derselben Ebene angeordnet, sind. Hingegen sind die Kabelbearbeitungswerkzeuge 5, 6 der jeweiligen Aufnahmeeinheiten 9, 10 derart arrangiert, dass sich die Kabelbearbeitungswerkzeuge 5, 6 der gemeinsamen Werkzeugpaare 3, 4 zumindest im Wesentlichen in derselben Ebene befinden. Auf diese Weise können beispielsweise beheizte Formwerkzeuge, die im Ausführungsbeispiel der Figuren 10 und 11 die Kabelbearbeitungswerkzeuge 5, 6 des ersten Werkzeugpaars 3 bilden, thermisch von den weiteren Komponenten der Vorrichtung beabstandet sein.

Um die Kabelbearbeitungswerkzeuge 5, 6 derselben Aufnahmeeinheit 9, 10 entsprechend axial zu versetzen, wie dargestellt, können die Aufnahmeeinheiten 9, 10 jeweils Ausleger 24 aufweisen, an denen jeweils eines der Kabelbearbeitungswerkzeuge 5, 6 befestigt ist. Damit hierdurch die relative, lineare Bewegbarkeit der Aufnahmeeinheiten 9, 10 nicht blockiert wird, kann der Ausleger 24 zumindest einer der Aufnahmeeinheiten 9, 10 beispielsweise durch einen geeigneten Durchbruch 25 in der anderen Aufnahmeeinheit 10, 9 hindurchgeführt sein. Dies ist in Figur 11 gut erkennbar, in der zur besseren Darstellbarkeit der Ausleger 24 der hinteren Aufnahmeeinheit 9 geschnitten ist und einige weitere Komponenten der Vorrichtung 1 ausgeblendet sind.

Die Kabelbearbeitungswerkzeuge 5, 6 bzw. die beheizten Formwerkzeuge des ersten Werkzeugpaars 3 sind in den Figuren 10 und 11 außerdem nicht in zwischen den Aufnahmeeinheiten 5, 6 gebildeten Hohlräumen aufgenommen, sondern in Aufnahmeschlitzen 16 jeweiliger Werkzeughalter 26 fixiert, die außerdem beheizbar sind (vgl. die Kabelzuführungen in Figur 10). Für eine gute thermische Trennung mit weiteren Komponenten der Vorrichtung 1 können Teile des Werkzeughalters 26 und/oder können die Ausleger 24 gegebenenfalls aus einem thermisch wenig leitenden Material ausgebildet sein, beispielsweise aus einer speziellen Keramik. Mit den dargestellten beheizten Formwerkzeugen kann beispielsweise eine Kabelfolie vor dem Abtrennen im Rahmen eines Abisoliervorgangs mechanisch geschwächt werden.

## Patentansprüche

1. Vorrichtung (1) zum Bearbeiten eines Kabels (2), aufweisend eine Aktuatoreinrichtung (13), ein primäres Werkzeugpaar (3), ein sekundäres Werkzeugpaar (4) und eine Werkzeugaufnahmeeinrichtung (8) mit einer ersten Aufnahmeeinheit (9) und einer zweiten Aufnahmeeinheit (10), die winklig zu einer Kabelzuführrichtung (K) und relativ zueinander von der Aktuatoreinrichtung (13) entlang einer Werkzeugbewegungsachse (W) bewegbar sind, wobei die Werkzeugpaare (3, 4) jeweils ein erstes Kabelbearbeitungswerkzeug (5) und ein gegenüberliegendes, zweites Kabelbearbeitungswerkzeug (6) aufweisen, mit jeweils aufeinander ausgerichteten Funktionsbereichen (7), so dass eine Bearbeitung des Kabels (2) zwischen den Kabelbearbeitungswerkzeugen (5, 6) des jeweiligen Werkzeugpaares (3, 4) erfolgen kann, wobei
- in der ersten Aufnahmeeinheit (9) ein erstes Kabelbearbeitungswerkzeug (5) des primären Werkzeugpaares (3) und ein zweites Kabelbearbeitungswerkzeug (6) des sekundären Werkzeugpaares (4) gegenüberliegend; und
- in der zweiten Aufnahmeeinheit (10) ein zweites Kabelbearbeitungswerkzeug (6) des primären Werkzeugpaares (3) und ein erstes Kabelbearbeitungswerkzeug (5) des sekundären Werkzeugpaares (4) gegenüberliegend
angeordnet sind.

2. Vorrichtung (1) nach Anspruch 1,
**dadurch gekennzeichnet , dass**
die Aufnahmeeinheiten (9, 10) bewegungsgekoppelt und von der Aktuatoreinrichtung (13) synchron gegenläufig bewegbar sind.

3. Vorrichtung (1) nach Anspruch 1 oder 2,
**dadurch gekennzeichnet , dass**
die Aufnahmeeinheiten (9, 10) von der Aktuatoreinrichtung (13) relativ zueinander linear bewegbar sind.

4. Vorrichtung (1) nach einem der Ansprüche 1 bis 3,
**dadurch gekennzeichnet , dass**
die Aufnahmeeinheiten (9, 10) mit einer jeweiligen Seitenfläche (15) unmittelbar aneinander anliegen und im Verlauf der relativen Bewegung längsseits zueinander verschiebbar sind.

5. Vorrichtung (1) nach einem der Ansprüche 1 bis 4,
**dadurch gekennzeichnet , dass**
die Aufnahmeeinheiten (9, 10) Aufnahmeschlitze (16) für die Kabelbearbeitungswerkzeuge (5, 6) aufweisen, so dass die Kabelbearbeitungswerkzeuge (5, 6) winklig zu der Kabelzuführrichtung (K) und vorzugsweise winklig zu der Werkzeugbewegungsachse (W) entlang einer Werkzeugmontagerichtung (M) in die Aufnahmeeinheiten (9, 10) einführbar sind.

6. Vorrichtung (1) nach Anspruch 5,
**dadurch gekennzeichnet , dass**
die Aufnahmeschlitze (16) als Hohlräume zwischen den unmittelbar aneinander anliegenden Aufnahmeeinheiten (9, 10) ausgebildet sind.

7. Vorrichtung (1) nach Anspruch 5 oder 6,
**dadurch gekennzeichnet , dass**
zumindest die Aufnahmeschlitze (16) einer der Aufnahmeeinheiten (9, 10), vorzugsweise beider Aufnahmeeinheiten (9, 10), von einer gemeinsamen Abdeckung (18) verdeckbar sind, vorzugsweise von einer schwenk- bzw. rotierbaren Abdeckung (18), deren Rotationsachse (R) parallel zu der Werkzeugmontagerichtung (M) verläuft.

8. Vorrichtung (1) nach einem der Ansprüche 1 bis 7,
**dadurch gekennzeichnet , dass**
die in der ersten Aufnahmeeinheit (9) angeordneten Kabelbearbeitungswerkzeuge (5, 6) in einer ersten Ebene (E₁) und die in der zweiten Aufnahmeeinheit (10) angeordneten Kabelbearbeitungswerkzeuge (5, 6) in einer von der ersten Ebene (E₁) verschiedenen, zweiten Ebene (E₂) angeordnet sind.

9. Vorrichtung (1) nach Anspruch 8,
**dadurch gekennzeichnet , dass**
die in der ersten Aufnahmeeinheit (9) angeordneten Kabelbearbeitungswerkzeuge (5, 6) und die in der zweiten Aufnahmeeinheit (10) angeordneten Kabelbearbeitungswerkzeuge (5, 6) mit einer jeweiligen Werkzeugfläche im Verlauf der relativen Bewegung der Aufnahmeeinheiten (9, 10) unmittelbar aufeinander gleitend, längsseits zueinander verschiebbar sind.

10. Vorrichtung (1) nach einem der Ansprüche 1 bis 9,
**dadurch gekennzeichnet , dass**
die Kabelbearbeitungswerkzeuge (5, 6) derselben Aufnahmeeinheit (9, 10) jeweils einstückig aus einem gemeinsamen Grundkörper ausgebildet sind.

11. Vorrichtung (1) nach einem der Ansprüche 1 bis 10,
**dadurch gekennzeichnet , dass**
die Kabelbearbeitungswerkzeuge (5, 6) und die Aufnahmeeinheiten (9, 10) jeweils mechanisch kodiert sind, so dass die Kabelbearbeitungswerkzeuge (5, 6) nur in einer vordefinierten Orientierung, einer vordefinierten gegenseitigen Anordnung und/oder einer vordefinierten Verteilung auf die Aufnahmeeinheiten (9, 10) in der Werkzeugaufnahmeeinrichtung (8) montierbar sind.

12. Vorrichtung (1) nach einem der Ansprüche 1 bis 11,
**dadurch gekennzeichnet , dass**
das primäre Werkzeugpaar (3) und das sekundäre Werkzeugpaar (4) für unterschiedliche Kabelbearbeitungsschritte im Rahmen der Bearbeitung des Kabels (2) eingerichtet sind, wobei sich deren jeweilige Kabelbearbeitungswerkzeuge (5, 6) vorzugsweise voneinander unterscheiden.

13. Vorrichtung (1) nach einem der Ansprüche 1 bis 12,
**dadurch gekennzeichnet , dass**
die Kabelbearbeitungswerkzeuge (5, 6) der Werkzeugpaare (3, 4) jeweils als Abisoliermesser, Ablängmesser, Längsschlitzmesser oder Formwerkzeuge ausgebildet sind.

14. Vorrichtung (1) nach einem der Ansprüche 1 bis 13,
**dadurch gekennzeichnet , dass**
die Kabelbearbeitungswerkzeuge (5, 6) jeweils mehrere Funktionsbereiche (7₁, 7₂) aufweisen, die in einer Raumrichtung winklig zu der Kabelzuführrichtung (K) und winklig zu der Werkzeugbewegungsachse (W) voneinander beabstandet sind, wobei die verschiedenen Funktionsbereiche (7₁, 7₂) vorzugsweise zur Bearbeitung von Kabeln (2) mit verschiedenen Kabeldurchmessern eingerichtet sind.

15. Verfahren zur Bearbeitung eines Kabels (2), umfassend zumindest die folgenden Verfahrensschritte:
- Bereitstellen eines ersten Kabelbearbeitungswerkzeugs (5) eines primären Werkzeugpaares (3) und eines hierzu gegenüberliegenden zweites Kabelbearbeitungswerkzeugs (6) eines sekundären Werkzeugpaares (4) in einer ersten Aufnahmeeinheit (9) einer Werkzeugaufnahmeeinrichtung (8);
- Bereitstellen eines zweiten Kabelbearbeitungswerkzeugs (6) des primären Werkzeugpaares (3) und eines hierzu gegenüberliegenden ersten Kabelbearbeitungswerkzeugs (5) des sekundären Werkzeugpaares (4) in einer zweiten Aufnahmeeinheit (10) der Werkzeugaufnahmeeinrichtung (8); und
- Bewegen der Aufnahmeeinheiten (9, 10) relativ zueinander winklig zu einer Kabelzuführrichtung (K), um eine Bearbeitung des Kabels (2) zwischen den Kabelbearbeitungswerkzeugen (5, 6) des jeweiligen Werkzeugpaares (3, 4) durchzuführen.
